Europäisches Patentamt

European Patent Office

Office européen des brevets

(11) Veröffentlichungsnummer: **0 055 304**
**B1**

(12) **EUROPÄISCHE PATENTSCHRIFT**

(45) Veröffentlichungstag der Patentschrift:
**28.10.87**

(21) Anmeldenummer: **80108268.6**

(22) Anmeldetag: **31.12.80**

(51) Int. Cl.⁴: **G 05 D 1/03**

(54) Flurförderfahrzeug mit Antriebseinrichtungen für hohe Geschwindigkeiten in beiden Fahrtrichtungen.

(43) Veröffentlichungstag der Anmeldung:
**07.07.82 Patentblatt 82/27**

(45) Bekanntmachung des Hinweises auf die Patenterteilung:
**28.10.87 Patentblatt 87/44**

(84) Benannte Vertragsstaaten:
**DE FR**

(56) Entgegenhaltungen:
**EP - A - 0 001 504
DE - A - 2 941 507
DE - B - 1 125 786
FR - A - 2 239 375**

**ELEKTRONIK, Band 18, Nr. 12, Dezember 1969,
München, (DE), J. SCHICK: "Die Lenkregelung von
Flurförderzeugen im Leitwegsystem", Seiten 365-368**

(73) Patentinhaber: **Jungheinrich Unternehmensverwaltung
KG, Friedrich-Ebert-Damm 129, D-2000 Hamburg 70 (DE)**

(72) Erfinder: **Barfuss, Heiner, Dipl.-Ing., Fuhlsbütteler
Strasse 597, D-2000 Hamburg 63 (DE)**

(74) Vertreter: **Kretzschmar, Otto Robert, Dipl.-Ing., Beim
Strohhause 34, D-2000 Hamburg 1 (DE)**

## Beschreibung

Die Erfindung betrifft ein Flurförderfahrzeug mit Antriebseinrichtung für hohe Geschwindigkeit in beiden Fahrtrichtungen und einer einen Mikrocomputer als Vergleichseinrichtung aufweisenden Steuereinrichtung, die mit einem Fahrspur-Leitelement durch einen Sensor gekoppelt ist und mittels einer Lenkwinkel-Steuervorrichtung einen Lenkwinkel von gelenkten Rädern entsprechend einer Kurvenführung einstellt, wobei auf dem Fahrzeug Antriebs- und Bremseinrichtungen vorgesehen sind und für die Lenkwinkel-Steuervorrichtung ein Soll-Lenkwinkel ausgegeben wird, der aus wenigstens einem Wert einer Einflussgrösse für die zulässige seitliche Abweichung in Abhängigkeit von der jeweiligen Fahrgeschwindigkeit umgekehrt zur Höhe der Fahrgeschwindigkeit abgeleitet ist, und auch ein der Fahrgeschwindigkeit entsprechendes Signal in die Steuereinrichtung eingeführt wird, deren Mikrocomputer fahrzeugabhängig vorgegebene oder vorprogrammierte Werte enthält und deren Ausgangssignale der Lenkwinkel-Steuervorrichtung zugeführt werden.

Dabei bezieht sich die Erfindung insbesondere auf ein Flurförderfahrzeug mit wenigstens einem Sensor zur Abtastung einer induktiv Energie ausstrahlenden Leitlinie. Hierbei liegt eine vorteilhafte Ausführungsform in einem Sensor, der aus wenigstens zwei hintereinander angeordneten Abtastorganen besteht, durch welche der Winkel der Mittelachse des Fahrzeuges und eine Seitenversetzung zur Leitlinie ermittelbar sind. Es wird einbezogen, dass ein Sensor lediglich eine Grösse entsprechend der Seitenversetzung zu einer Leitlinie anzeigt. Immer wird dabei von den ermittelten Signalen wenigstens ein gelenktes Rad oder ein Paar gelenkte Räder eingestellt, um der Kurve der Leitlinie zu folgen.

Längs einer Leitlinie, insbesondere induktiv, geführte Fahrzeuge, namentlich solche, die in beiden Fahrtrichtungen hohe Geschwindigkeiten erreichen, wie es bei Hochregalstaplern oder anderen Flurförderfahrzeugen der Fall ist, haben eine Mess- und Betätigungseinrichtung, durch welche die Lenkung bei einem bestimmten Winkel verstellt werden kann, um das Fahrzeug auf der Leitlinie (Kurs) zu halten. Der Ausdruck «Leitlinie» bezieht insbesondere einen im Boden verlegten Führungsdraht ein, um welchen ein elektromagnetisches, radialsymmetrisches Feld entwickelt wird, das vom Sensor abgetastet wird, um den seitlichen Abstand der Fahrzeugmitte und gegebenenfalls auch den Winkel der Fahrzeugachse zur Leitlinie zu messen. Die Sensoren können in verschiedener Weise ausgeführt sein, je nach Ausbildung der Leitlinie, wobei bei optischer Leitlinie auch eine optische Abtastung einbezogen wird.

Ein eingangs beschriebenes Flurförderfahrzeug und eine Lenkwinkel-Steuervorrichtung sind bekannt aus der DE-B-1 125 786 und der EP-A-0 001 504.

Aus erstgenannter DE-B-1 125 786 wird die Lenkeinrichtung durch ein von der Fahrgeschwindigkeit abhängiges Servoglied reziprok gesteuert. Hierbei ist auch eine Änderung einer Verstärkung des Signals mit dem Reziprokwert des Quadrates der Fahrgeschwindigkeit bekannt.

Die EP-A-0 001 504 zeigt auch eine Steuerung eines Fahrzeuges auf einem Führungsdraht. Dabei ergeben sich Probleme aufgrund der Auslegung bekannter Lenkwinkel-Steuervorrichtungen derart, dass zwar eine gerade Fahrstrecke mit hoher Geschwindigkeit durchfahren werden kann, dass aber dann, wenn die Richtungsabweichungen bestimmte Grössenordnungen überschreiten, d. h., wenn der Ist-Lenkwinkel über ein bestimmtes Mass hinausgeht, Bedingungen auftreten können, unter denen die Fahrzeugführung nicht mehr sicher gewährleistet ist.

Der Ist-Lenkwinkel wird bekanntlich nach der Beziehung

$$\Theta = K_1 \cdot y + K_2 \cdot \Psi \text{ bestimmt.}$$

Dabei bezeichnen:

$\Theta$      den Ist-Lenkwinkel des Fahrzeuges als den tatsächlichen gemessenen Winkel zwischen der Richtung des/der gelenkten Rades/gelenkten Räder und der Fahrzeuglängsachse,

$y$      die seitliche Versetzung des Fahrzeuges im Bereich des Sensors zur Leitlinie (Kurs) z.B. in cm,

$\Psi$      den Winkel zwischen der Fahrzeuglängsachse und dem jeweils erfassten Abschnitt der Leitlinie (Kurs) z.B. in Grad,

$K_1$ und $K_2$ konstante Faktoren der Dimension $\text{Grad}/_{\text{cm}}$ und $\text{Grad}/_{\text{Grad}}$

Da die Werte $K_1$ und $K_2$ somit die Grösse des Ist-Lenkwinkels mitbestimmen, eine sichere Fahrzeugführung aber nur bei einem relativ kleinen Ist-Lenkwinkel möglich ist, kann diese Bedingung nur mit kleinen Werten $K_1$ und $K_2$ für die zulässige Abweichung, d.h. für den Soll-Lenkwinkel, erfüllt werden. Das aber führt zu Nachteilen in der Manövrierfähigkeit.

Wenn eine gerade Strecke mit hoher Geschwindigkeit durchfahren werden soll, soll nur ein kleiner Soll-Lenkwinkel zugelassen werden, da bei hoher Geschwindigkeit und grossem Ist-Lenkwinkel die Möglichkeit grosser Abweichungen und damit gegebenenfalls erhebliche Lenkkorrekturerfordernisse sowie ruckartige Lenkbewegungen auftreten können. Durch eine ruckartige Lenkbewegung wird am Fahrzeug ein Schwingungsvorgang eingeleitet, der erst nach einiger Zeit wieder abklingt. Folgen diese ruckartigen Lenkbewegungen zufällig in einem Abstand aufeinander, der der Eigenschwingung des Fahrzeugs entspricht, so wird dasselbe sehr stark aufgeschaukelt. Hinzu kommt die endliche Einstellgeschwindigkeit des Lenkstellers. Bei hoher Geschwindigkeit bewegt sich das Fahrzeug erhebliche Strecken, bis der Soll-Lenkwinkel eingestellt ist. Dadurch wird wiederum die Fahrsicherheit beeinflusst. Beim Durchfahren einer Kurve führt die zwangsläugige Abweichung der Fahrzeuglängsachse von der Leitlinie aber zur Erfordernis eines relativ grossen Soll-Lenkwinkels, nämlich eines Winkels mit der Summe aus dem Soll-Lenkwinkel für Geradeausfahrt plus dem Winkel, der durch die Kurvenabweichung bedingt ist, dem Kurswinkel-Istwert. Die Werte von $K_1$ und $K_2$ müssten verhältnismässig gross zugelassen werden, damit das Fahrzeug der Leitlinie folgen kann. Da ein grosser Ist-/Soll-Lenkwinkel nur eine geringe Fahrgeschwindigkeit zulässt, eine Fahrstrecke mit Kurven aber einen grossen Ist-/Soll-Lenkwinkel erfordert, ist sowohl für Kurven als auch für Geradeausfahrt nur eine geringe Fahrgeschwindigkeit zulässig.

Hierbei können Dämpfungsfaktoren sowohl für die Vorwärts- als auch für die Rückwärtsfahrt erhalten werden, wobei auch verbesserte Fahrzeuggeschwindigkeitsbegrenzungen und Stopschaltungen vorgesehen sind, die entsprechend der errechneten Richtung und seitliche Abweichung unabhängig voneinander vorgesehen sind.

Bei einer Hochgeschwindigkeitssteuerung im Zusammenhang mit der Verminderung der Faktoren $K_1$ und $K_2$ kann erreicht werden, dass das Fahrzeug nicht nur während langsamer oder hoher Geschwindigkeiten bei Fahrt an einer im wesentlichen geraden Leitlinie automatisch geführt wird, sondern auch in Kurven, wie am Ende eines Regalganges. Hierbei muss ein logisches Signal umgeschaltet werden, wenn das Fahrzeug einen Fahrtabschnitt mit vorgegebenem kleinem Krümmungsradius erreicht, damit nicht eine gewünschte Fahrgeschwindigkeit überschritten wird. Für die Umschaltung sind verschiedene Mittel angegeben, wie eben auch im Boden angeordnete Markierungen. Solche Markierungen liefern an einen Empfänger im Fahrzeug Signale, proportional zur Charakteristik der zu fahrenden Kurve. Dabei wird der Steuerschaltung vor einer Kurve eine Konstantspannung aufgeschaltet, die einem bestimmten Kurvenradius angepasst ist und einen entsprechenden Lenkradeinschlag steuert. Die Konstantspannung wird bekanntermassen als zusätzliche Führungsgrösse auf den Lenkregelkreis aufgeschaltet. Diese bekannte Lösung hat in der Anwendung beschränkte Bedeutung, weil einerseits nur Kurven mit gleichbleibendem Krümmungsradius, d.h. Kreisbögen, sicher durchfahren werden können, und andererseits für jeden Krümmungsradius eine andere Spannung auferlegt wird.

Selbst wenn nun nach einer anderen bekannten Ausführung eine Elektronik eingesetzt wird, die zu Beginn und zum Ende einer Kurve erregbar ist, und zwar insbesondere durch eine Bodenmarkierung, um ein Signal entsprechend dem Kurvenzustand zu liefern, dann ergibt sich der Nachteil, dass zwischen beiden Signalen eine Umschaltung erforderlich ist, um nämlich einmal zu Beginn einer Kurve ein Kurvenlenksignal zu liefern, und zum anderen, um zum Ende einer Kurve ein solches Lenksignal im Sinne einer Geradeausfahrt zu verändern.

Die Veränderung beinhaltet die Löschung des Signals oder auch die zeitbedingte Einschaltung eines Gegensignals, d.h., die zugeordneten Werte $K_1$, $K_2$ werden umgeschaltet. Weil die durch den Sensor aufgenommenen Signale für die seitliche Versetzung und den Kurswinkel bei Geradeausfahrt anders bewertet werden als für die Kurvenfahrt, entsteht der Nachteil, dass bei Übergang zwischen Kurvenfahrt und Geradeausfahrt ruckartige Lenkbewegungen an wenigstens einem lenkbaren Rad auftreten können, das Fahrzeug — w.o.a. — aufgeschaukelt und in der Fahrsicherheit beeinflusst werden kann. Selbst bei niedriger Geschwindigkeit des Fahrzeuges ist die Manövrierfähigkeit bei Geradeausfahrt, z.B. im Regalgang, infolge der Begrenzung des Lenkwinkels gering.

Bei Durchfahrt einer Kurve mit hoher Geschwindigkeit sorgt die Einspeisung einer Kenngrösse in Abhängigkeit von der Geschwindigkeit in die Lenkwinkel-Steuervorrichtung für eine enge Bindung des Fahrzeugs an den Verlauf der Leitlinie. Hierbei wird insbesondere einbezogen, dass der Soll-Lenkwinkel entsprechend der Formel

$$\Theta_{soll} = K_1 \left(\frac{1}{v}\right) \cdot y + K_2 \left(\frac{1}{v}\right) \cdot \Psi$$

einstellbar ist, wobei die beiden Werte $K_1$ und $K_2$ Funktionen der Fahrgeschwindigkeit v sind. Dabei wird die Wirkungsgrösse der Konsonanten $K_1$ und $K_2$ mit zunehmender Fahrgeschwindigkeit geringer. Dieses gilt aber nur für die Lenkung.

Der Erfindung liegt die Aufgabe zugrunde, ein Fahrzeug der eingangs angegebenen Art so auszugestalten, dass eine Kurvenfahrt nicht willkürlich durch Eingang in die und Ausgang aus der Kurve steuerbar ist, sondern unter einer laufenden Anpassung steht, um die Kurve entsprechend den jeweiligen Verhältnissen mit optimaler Fahrgeschwindigkeit durchfahren zu können.

Diese Aufgabe wird dadurch gelöst, dass Ausgangssignale aus dem Mikrocomputer in die Antriebs- und Bremseinrichtung im Mikrocomputer in Abhängigkeit wenigstens von der seitlichen Abweichung des Fahrzeuges zur Leitlinie, insbesondere aber auch in Abhängigkeit von der Winkelabweichung der Fahrzeuglängsachse von der Leitlinie dahingehend beeinflussbar sind, dass proportional zur Grösse der seitlichen Abweichung und ggf. auch zur Winkelabweichung, d.h. damit umgekehrt proportional zum Krümmungsradius der Leitlinie, eine Verminderung der Fahrzeuggeschwindigkeit vorgesehen ist.

Die Steuerung der Antriebs- und Bremseinrichtung führt zu einer besonders günstig angepassten Fahrweise, die stossfrei ist und auch bei Kurvenfahrten eine je nach Fahrzeugausführung und/oder -belastung höchstmögliche Geschwindigkeit zulässt.

Vorteilhaft ergibt sich das Abtriebs- und Bremssignal aus der Bedingung

$$M = f_1 [K_1 (v)] \cdot f_2 [K_2 (v)] \cdot f_3 (y) \cdot f_4 (\Psi)$$

wobei in diesem Fall eine direkte Proportionalität zur Höhe der Fahrgeschwindigkeit vorliegt.

Die Erfindung wird im folgenden anhand von Ausführungsbeispielen beschrieben, die in der Zeichnung dargestellt sind. In der Zeichnung zeigen:

Fig. 1 eine Draufsicht einer schematischen Fahrzeugdarstellung in bezug zu einer Leitlinie;

Fig. 2 eine der Fig. 1 entsprechende Darstellung eines Fahrzeugs anderer Ausführung;

Fig. 3 eine der Fig. 1 entsprechende Darstellung einer weiteren Fahrzeugausführung;

Fig. 4 eine schematische Darstellung einer Schaltungseinheit;

Fig. 5 eine als Blockschaltungsbild dargestellte schematische Anordnung einer Fahrzeugsteuerung für ein Fahrzeug nach Fig. 3;

Fig. 6 eine Schaltungseinzelheit in Blockdarstellung für eine Baugruppe in Fig. 5.

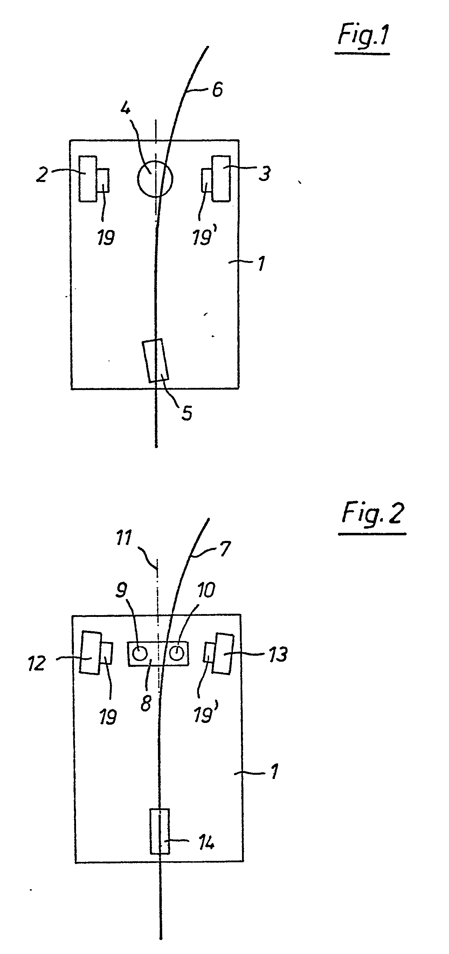

Fig. 1 zeigt ein Fahrzeug 1 mit zwei starrachsig angeordneten Lasträdern 2, 3, zwischen denen ein Sensor 4 angeordnet ist, und einem am Fahrzeugheck angeordneten gelenkten Rad 5. Dieses gelenkte Rad 5 wird in Abhängigkeit von einem Signal am Sensor 4 eingestellt, das sich in Abhängigkeit von einer Leitlinie 6 ergibt. Diese Leitlinie ist beispielsweise ein Deckstreifen, der optisch vom Sensor 4 abtastbar ist, aber, wie der Sensor 4, in seiner Fläche in optische Empfangselemente unterteilt ist. In Abhängigkeit von dem Mass und der Seitenausrichtung der Abdeckung von Abtastelementen ergibt sich ein Signal zur Einstellung des gelenkten Rades 5. Wenn ein Fahrzeug mit einem Sensor nach Fig. 1 ausgerüstet ist, wird zweckmässig ein Sensor am Bug und ein Sensor am Heck des Fahrzeuges angeordnet und beide Sensoren sind wahlweise einschaltbar, um Vorwärts- und Rückwärtsfahrt zu ermöglichen.

Wenn von einer optischen Abtastung nach Fig. 1 gesprochen wird, dann versteht sich, dass auch eine Leitlinie, die ein elektromagnetisches Feld entwickelt, induktiv entweder durch eine oder auch zwei einander zugeordnete Spulen verfolgbar ist, um jeweils die seitliche Versetzung anzuzeigen.

Dafür zeigt Fig. 2 ein Beispiel eines Fahrzeuges 1 über einer Leitlinie 7, die aufgrund ihrer Speisung mit einer elektrischen Wechselspannung ein elektromagnetisches Feld liefert. Das Fahrzeug hat z.B. im Bug einen Sensor 8 mit zwei Empfangsspulen 9 und 10, deren Signale die seitliche Abweichung von der Fahrzeuglängsachse 11 liefern. In Abhängigkeit von diesem Signal sind neben dem Sensor angeordnete gelenkte Räder 12, 13 einstellbar. Das Fahrzeugheck folgt unter sich anpassender Einstellung einer Nachlauflenkrolle 14. Es versteht sich, dass auch in diesem Falle wechselweise einschaltbare Sensoren am Fahrzeugbug und -heck angeordnet sein können und dass beispielsweise dann, wenn das Fahrzeug rückwärts fährt, das heisst die sogenannte Nachlauflenkrolle vorn am Fahrzeug angeordnet ist, diese Nachlauflenkrolle bei der Fahrtrichtung rückwärts in Ausrichtung zur Fahrzeuglängsachse feststellbar ist.

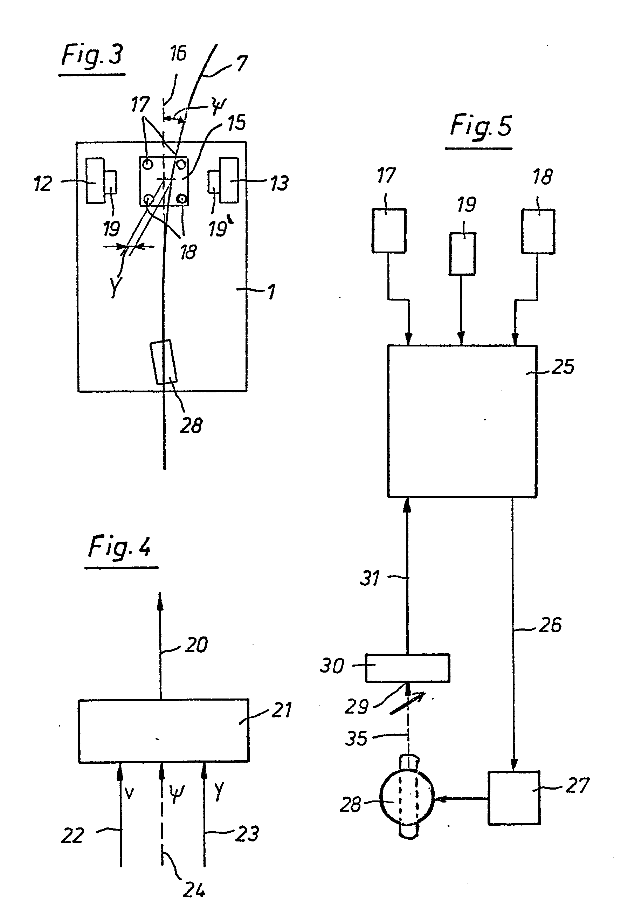

Fig. 3 zeigt eine besonders bevorzugte Ausführungsform, bei welcher ein im Fahrzeug 1 angeordneter Sensor 15 wenigstens zwei zur Fahrzeugmittelachse 16 ausgerichtete und mit geringem Abstand in Richtung der Fahrzeuglängsachse angeordnete Abtastspulenpaare 17, 18 aufweist. Durch einen solchen Sensor ist aufgrund einer Differenzbildung der Signale, sowohl der seitliche Versetzungswert y der Fahrzeugmittelachse vom erfassten Abschnitt der Leitlinie 7 als auch der Winkel $\Psi$ zwischen der Fahrzeugmittelachse 16 und der Leitlinie 7 erfassbar. Letztere Ausführung ist daher besonders wichtig.

Allen Ausführungen ist gemeinsam, dass an einem Rad, z.B. 12, ein Tachogenerator 19 angeordnet ist, der ein Signal entsprechend der Fahrgeschwindigkeit liefert. Dabei wird einbezogen, dass der Tachogenerator auch von einer eigenen Laufrolle antreibbar sein kann oder an einem insbesondere mittig am Fahrzeug angeordneten Rad gelagert ist.

Bei den Ausführungen nach den Figuren 1 und 2 ergeben sich daher ein von der Fahrgeschwindigkeit abhängiges Signal und ein von der Seitenabweichung von der Leitlinie 6 oder 7 abhängiges Signal. Hinsichtlich einer Kurvenfahrt wird dabei einbezogen, dass Tachogeneratoren als Signalgeber an zwei mit fluchtenden Achsen an beiden Seiten des Fahrzeugs angeordneten Rädern angeordnet sind, um eine Differenzbildung zu ermöglichen. Beispielsweise sind zu diesem Zweck zusätzliche Tachogeneratoren 19' angeordnet, wobei die Generatoren 19 und 19' zur Ermittlung eines mittleren Signals zusammengeschaltet sind.

Bei den Ausführungen nach den Figuren 1 und 2 ist den Tachogeneratoren 19 und 19' und den Sensoren 4 und 8 andererseits eine Vergleichseinrichtung 21 (Fig. 4) parallel geschaltet, und zwar derart, dass dann, wenn die Seitenabweichung bei einem bestimmten Geschwindigkeitssignal einen Schwellwert überschreitet, über 20 ein Signalgeber für eine Steuer- und Bremseinrichtung angeregt wird. Eine solche Vergleichseinrichtung 21 ermittelt das Produkt aus Geschwindigkeits- und Seitenabweichungssignal. Dabei ist zu berücksichtigen, dass eine kleine Seitenabweichung y eine hohe Fahrgeschwindigkeit und eine in vorgegebenen Grenzen verbleibende hohe Seitanabweichung entsprechend eine niedrige Geschwindigkeit zulassen.

In Fig. 4 ist eine als Mikrocomputer ausgeführte Vergleichseinrichtung 21 gezeigt, die zwei Signaleingänge 22 und 23 entsprechend einem Geschwindigkeitswert v und einem Wert y für die seitliche Abweichung hat.

Für die besonders bevorzugte Ausführungsform nach Fig. 3 ergibt sich beispielsweise im Hinblick auf Fig. 4 noch ein dritter Eingang 24 für den Kurswinkel $\Psi$ des Fahrzeugs. Dieser kann eine zusätzliche Überlagerung dahingehend einführen, dass das erwähnte Produkt proportional zum Kurswinkel beeinflusst wird, d.h. bei kleinem Kurswinkel zur Leitlinie im Gesamtwert herabgesetzt und bei grossem Kurswinkel gesteigert wird, so dass dadurch die Signalgabe im Ausgang 20 in Abhängigkeit von einem Schnellwert steuerbar ist.

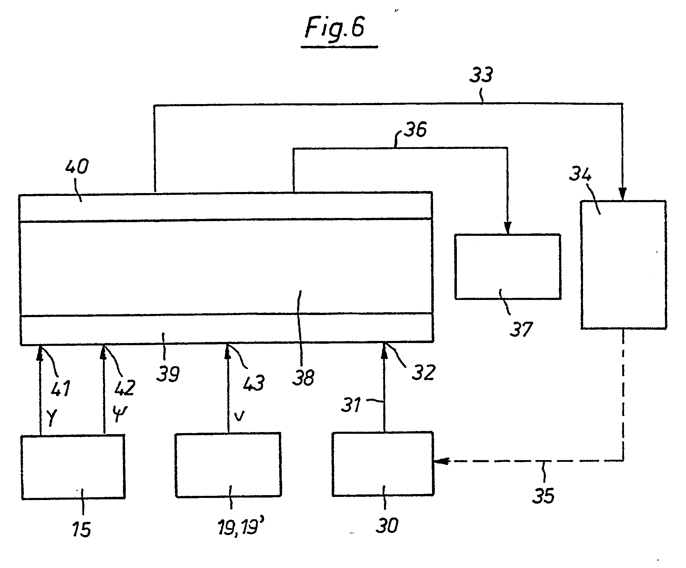

Figur 5 zeigt eine schematische Schaltung für eine Anordnung nach Fig. 3. Die beiden Abtastspulenpaare 17 und 18 und ein Tachogenerator 19 liefern ihre Signale in eine Schaltung 25, die eine Steuereinrichtung mit einem Mikrocomputer 38 als Vergleichseinrichtung darstellt, in der die erforderlichen Werte ermittelt und vereinigt werden. Über einen Ausgang 26, der mit einem Stellmotor oder einer Lenkwinkel-Steuervorrichtung 27 für mindestens ein gelenktes Rad 28 verbunden ist, wird das für die Lenkung massgebliche Vorgabesignal geliefert. In Abhängigkeit von der Winkelstellung des gelenkten Rades 28 wird ein Abgriff 29 einer Funktionsverbindung 35 zwischen Rad 28 und Rückführungspotentiometer 30 am Rückführungspotentiometer 30 verstellt.

Dadurch ergibt sich an diesem ein Ausgangssignal für den Lenkwinkel-Istwert. Eine Verbindung 31 zwischen dem Rückführungspotentiometer 30 und der Schaltung 25 liefert dieses Lenkwinkel-Istwert-Signal in die Schaltung. Die Schaltung 25 enthält nach Fig. 6 einen Mikrocomputer 38 mit einem Eingangsinterface 39 und einem Ausgangsinterface 40. Das Eingangsinterface 39 hat zwei Eingänge 41, 42, die von einem Sensor 15 gespeist sind, wobei auf einem Eingang 41 die seitliche Versetzung zwischen der Fahrzeugmittelachse und einem erfassten Leitlinienabschnitt als Signalgrösse eingegeben wird und auf dem anderen Eingang 42 der Winkel $\Psi$ zwischen der Leitlinie und der Fahrzeuglängsachse.

Weiterhin hat das Eingangsinterface einen Eingang 43, dem ein Geschwindigkeitssignal v vom Tachogenerator 19, 19' eingegeben wird, und noch einen weiteren Eingang 32, dem ein Signal entsprechend dem Ist-Wert des Lenkwinkels, beispielsweise ein Signal vom Rückführungspotentiometer 30, zugeführt wird.

In dem Mikrocomputer 38 wird aus diesen Eingangsgrössen in Abhängigkeit von der jeweiligen Fahrgeschwindigkeit ein Soll-Lenkwinkel gebildet. Dieser wird verrechnet gegen den vom Potentiometer 30 eingegebenen Ist-Lenkwinkel des Fahrzeuges. Bei Differenz erfolgt ein Signal aus einem ersten Ausgang über die Anschlussleitung 33 in eine hydraulische oder elektrische Lenkwinkel-Steuervorrichtung 34.

Das Ausgangsinterface hat einen zweiten Ausgang mit einer Funktionsverbindung 36 zu einer Antriebs- und Bremseinrichtung 37, die in Abhängigkeit von der Fahrgeschwindigkeit und dem Lenkwinkel betätigbar ist. Die Abhängigkeit ergibt sich dabei aus

$$\Theta_{Soll} = K_1 (v) \, y + K_2 (v) \, \Psi \text{ und}$$
$$\Theta_{Vorgabe} = \Theta_{Soll} - \Theta_{Rückf.} \text{ (Kurs-Istwert)}$$
$$M = f (\Theta_{Vorgabe}) \text{ (siehe Formel S.3).}$$

Diese Abhängigkeit ergibt sich aus direkter Proportionalität, bei der der Eingang mehrerer Messgrössen eine Produktbildung beinhaltet, da bei dem Rückgang einer Messgrösse auf Null auch eine Geschwindigkeitsänderung entfallen kann.

Bei der Stelleinrichtung 34 handelt es sich beispielsweise um ein mit dem Stellmotor 27 – in Fig. 5 – vergleichbares Element, von dem eine Funktionsverbindung 35, entsprechend der gleich bezeichneten Funktionsverbindung 35 in Fig. 5, zum Rückführungspotentiometer 30 geht.

Dabei wird einbezogen, dass in Abhängigkeit vom Lenkausschlag des gelenkten Rades 28 der Abgriff 29 am Rückführungspotentiometer mechanisch gekoppelt ist.

In Fig. 1 ist der Sensor 4 allgemein dargestellt. Hierunter können alle bekannten Ausführungen eines Sensors fallen. Der Sensor 8 nach Fig. 2 hat z. B. zwei Empfangsspulen. Gemäss Fig. 3 hat der Sensor 15 Abtastspulenpaare 17, 18. Einbezogen wird dabei auch ein Sensor, der eng benachbart drei Abtastorgane, insbesondere Spulenpaare, aufweist, von denen das mittlere Spulenpaar zu einer starren Radachse des Fahrzeuges ausgerichtet ist und dann einem dritten Spulenpaar noch ein besonderer Schaltkanal mit Operationsverstärkern nachgeschaltet ist, um auch den Krümmungsradius einer Leitlinie 6 oder 7 erfassen zu können, damit eine entsprechende Grösse als Signal zur Lenkwinkelbildung in den Computer eingespeist werden kann. Hierzu wird auf EP-A-001 505 hingewiesen.

Wenn die bisherige Beschreibung auch auf ein Flurförderfahrzeug gerichtet ist, dann beinhaltet die Erfindung zugleich ein Verfahren zum Verfahren eines solchen Flurförderfahrzeuges unter der angegebenen Aufgabenstellung und unter Einbeziehung üblicher oder angegebener Mittel zur Durchführung eines solchen Verfahrens. Hierauf wird ausdrücklich verwiesen, weil in Verbindung mit dem Verfahren auch noch weitergehende Abwandlungen in der Verwirklichung einbezogen werden.

**Patentansprüche**

1. Flurförderfahrzeug (1) mit Antriebseinrichtung für hohe Geschwindigkeiten in beiden Fahrtrichtungen und einer einen Mikrocomputer (38) als Vergleichseinrichtung aufweisenden Steuereinrichtung (25), die mit einem Fahrspur-Leitelement (6, 7) durch einen Sensor (4, 8, 15) gekoppelt ist und mittels einer Lenkwinkel-Steuervorrichtung (27, 34) einen Lenkwinkel von gelenkten Rädern (5, 12, 13, 28) entsprechend einer Kurvenführung einstellt, wobei auf dem Fahrzeug Antriebs- und Bremseinrichtungen (37) vorgesehen sind und für die Lenkwinkel-Steuervorrichtung (27, 34) ein Soll-Lenkwinkel ausgegeben wird, der aus wenigstens einem Wert einer Einflussgrösse für die zulässige seitliche Abweichung in Abhängigkeit von der jeweiligen Fahrgeschwindigkeit (v) umgekehrt zur Höhe der Fahrgeschwindigkeit (v) abgeleitet ist, und auch ein der Fahrgeschwindigkeit entsprechendes Signal (v) in die Steuereinrichtung (25) eingeführt wird, deren Mikrocomputer (38) fahrzeugabhängig vorgegebene oder vorprogrammierte Werte enthält und deren Ausgangssignale der Lenkwinkel-Steuervorrichtung (27, 34) zugeführt werden, dadurch gekennzeichnet, dass Ausgangssignale aus dem Mikrocomputer (38) in die Antriebs- und Bremseinrichtung (37) im Mikrocomputer in Abhängigkeit wenigstens von der seitlichen Abweichung (y) des Fahrzeuges (1) zur Leitlinie (6, 7), insbesondere aber auch in Abhängigkeit von der Winkelabweichung (Ψ) der Fahrzeuglängsachse (11) von der Leitlinie (6, 7) dahingehend beeinflussbar sind, dass proportional zur Grösse der seitlichen Abweichung (y) und ggf. auch zur Winkelabweichung (Ψ), d.h. damit umgekehrt proportional zum Krümmungsradius der Leitlinie, eine Verminderung der Fahrgeschwindigkeit (v) vorgesehen ist.

2. Flurförderfahrzeug nach Anspruch 1, gekennzeichnet durch die Entwicklung eines Antriebs- und Bremssignales entsprechend der Bedingung

$$M = f_1\,[K_1\,(v)] \cdot f_2\,[K_2\,(v)] \cdot f_3\,(y) \cdot f_4\,(\Psi)$$

wobei eine direkte Proportionalität zur Höhe der Fahrgeschwindigkeit vorliegt und wobei
$K_1, K_2$ = von der Fahrgeschwindigkeit abhängige Konstanten,
$y$ = seitliche Abweichung,
$\Psi$ = Winkelabweichung.

## Claims

1. An industrial truck (1) comprising drive means for high speeds in both directions of travel and control means (25), which comprise a microcomputer (38) as a comparator and are coupled by a sensor (4, 8, 15) to a lane-defining guiding element (6, 7) and by means of a steering-angle controller (27, 34) adjusts a steering angle of steered wheels (5, 12, 13, 28) in accordance with a curved path, wherein the truck is provided with driving and braking means (37) and a desired steering angle for the steering angle controller (27, 34) is issued, which desired steering angle is derived from at least one value of a controlling variable for the permissible lateral deviation in dependence on the actual speed of travel (v) and is reciprocal to the magnitude of the speed of travel, and a signal (v) which corresponds to the speed of travel is also introduced into the control means (25), the microcomputer (38) of which contains values which are predetermined in dependence on the vehicle or are pre-programmed and the output signals thereof are delivered to the steering angle controller (27, 34), characterized in that output signals delivered by the microcomputer (38) to the driving and braking means (37) are adapted to be influenced in the microcomputer in dependence at least on the lateral deviation (y) of the truck (1) from the guideline (6, 7), and particularly also in dependence on the angular misalignment (Ψ) of the longitudinal axis (11) of the vehicle from the guideline (6, 7), in such a manner that the speed of travel (v) is reduced in proportion to the magnitude of the lateral deviation (y) and, if desired also to the angular misalignment (Ψ), i.e., in inverse proportion to the radius of curvature of the guideline.

2. An industrial truck according to claim 1, characterized by the generation of a driving and braking signal in accordance with the condition

$$M = f_1\,[K_1\,(v)] \times f_2\,[K_2\,(v)] \times f_3\,(y) \times f_4\,(\Psi)$$

and in direct proportion to the magnitude of the speed of travel, wherein
$K_1, K_2$ = constants depending on the speed of travel
$y$ = lateral deviation
$\Psi$ = angular misalignment.

## Revendications

1. Véhicule de transport de charges (1) pourvu d'un dispositif de propulsion à vitesses élevées dans les deux sens de marche et d'un dispositif de commande (25) comprenant un micro-ordinateur (38) comme système de comparaison, qui, par l'intermédiaire d'un détecteur (4, 8, 15), est couplé avec un élément de guidage de voie de circulation (6, 7) et règle, au moyen d'un système de commande d'angle de direction (27, 34) un angle de braquage des roues directrices (5, 12, 13, 28) conformément à un tracé courbe, le véhicule étant équipé de dispositifs de propulsion et de freinage (37), un angle de braquage théorique étant fourni par le système de commande d'angle de direction (27, 34) qui est dérivé d'au moins une valeur d'une grandeur d'influence pour l'écart latéral admissible en fonction de la vitesse de translation (v) respective en raison inverse de la grandeur de la vitesse de translation (v) et un signal (v) correspondant à la vitesse de translation étant injecté dans le dispositif de commande (25) dont le micro-ordinateur (38) contient des valeurs prédéterminées ou préprogrammées et dont les signaux de sortie sont transmis au système de commande d'angle de direction (27, 34), caractérisé en ce que des signaux de sortie du micro-ordinateur (38) pour les dispositifs de propulsion et de freinage (37) peuvent être influencés dans le micro-ordinateur en fonction au moins de l'écart latéral (y) du véhicule (1) par rapport à la ligne de guidage (6, 7), mais notamment aussi en fonction de l'écart angulaire (Ψ) de l'axe longitudinal (11) du véhicule par rapport à la ligne de guidage (6, 7), en ce sens qu'une réduction de la vitesse de translation (v) est prévue proportionnellement à la grandeur de l'écart latéral (y) et aussi, le cas échéant, à l'écart angulaire (Ψ), c'est-à-dire donc d'une manière inversement proportionnelle au rayon de courbure de la ligne de guidage.

2. Véhicule de transport de charges selon la revendication 1, caractérisé par l'élaboration d'un signal de propulsion et de freinage conformément à la condition

$$M = f_1\,[K_1\,(v)] \cdot f_2\,[K_2\,(v)] \cdot f_3\,(y) \cdot f_4\,(\Psi)$$

avec une proportionalité directe avec la grandeur de la vitesse de translation et avec
$K_1, K_2$ = constantes dépendant de la vitesse de translation,
$y$ = écart latéral,
$\Psi$ = écart angulaire.

*Fig.1*

*Fig. 2*

_Fig. 3_

_Fig. 5_

_Fig. 4_

9

Fig.6